# EUROPEAN PATENT SPECIFICATION

(11) **EP 2 922 910 B1**
(45) Date of publication and mention of the grant of the patent: **08.01.2020**
(21) Application number: 13801904.7
(22) Date of filing: 22.11.2013
(51) Int. Cl.: C08K 5/14, C08K 3/06

(54) **METHOD OF MANUFACTURING AN ELASTOMERIC PRODUCT WITH A LOW HYSTERESIS**
VERFAHREN ZUR HERSTELLUNG EINES ELASTOMEREN PRODUKTS MIT NIEDRIGER HYSTERESE
PROCÉDÉ DE FABRICATION D'UN PRODUIT ÉLASTOMÈRE À FAIBLE HYSTÉRÉSIS

(30) Priority: 23.11.2012 NL 2009868
(43) Date of publication of application: 30.09.2015
(73) Proprietor: Apollo Vredestein B.V., 7547 RD Enschede (NL)
(72) Inventor: REUVEKAMP, Louis-Philippe Antoine Eugène Maria, NL-7546 GE Enschede (NL); NIJMAN, Gerard, NL-7581 AV Losser (NL)
(74) Representative: Michalski Hüttermann & Partner Patentanwälte mbB
(86) International application number: PCT/NL2013/050844
(87) International publication number: WO 2014/081297

(56) References cited:
- EP-A1- 1 033 386
- WO-A1-2008/063067

## Description

The invention relates to a method of manufacturing an elastomeric product with a low hysteresis lowering hysteresis of elastomeric products. The invention also relates to an elastomeric product, in particular a flexible spoiler or a tire, obtainable by the method of the present invention and having a low hysteresis.

Hysteresis relates to the property of elastomeric products to return to their original shape after deformation as a result of loading. In case of important hysteresis, energy is lost as heat in a loading-unloading cycle, which is undesirable for a number of reasons.

Rolling resistance of a tire for instance relates to the force resisting relative movement of the tire and the road. As the tire rotates under the weight of the vehicle, it experiences repeated cycles of deformation and recovery. When the rubber in a tire exhibits hysteresis, the tire will dissipate the hysteresis energy loss in the loading-unloading cycle as heat. Hysteresis is the main cause of energy loss associated with rolling resistance and is attributed to the viscoelastic characteristics of the rubber.

In the automotive industry flexible spoilers have recently been introduced as a device to modify air flow in order to increase the aerodynamics of the vehicle and consequently increase fuel efficiency. A flexible air-guiding device for a spoiler is for instance described in US 7,055,891 B2. Spoilers comprising rubber components exhibit hysteresis as well. As a consequence, energy is lost due to the viscoelastic characteristics of the rubber used.

Hysteresis in elastomeric products such as tire side walls or flexible spoilers is generally undesirable and the viscoelasticity of the elastomer in the product should be as low as possible. Therefore, there is a need to develop a method of manufacturing elastomeric products having a low hysteresis, in particular lower than the hysteresis levels typically occurring in the known elastomeric products.

EP 1 033 386 A1 relates to the preparation of EPDM-based and EPR-based rubber compositions which are vulcanized with peroxide together with a specified combination of sulfur and acrylate co-agents. EP 1 033 386 A1 further relates to articles having at least one component thereof.

WO 2008/063067 A1 relates to a method for mutually adhering moulded articles of at least partially vulcanized rubber polymers. The method comprises at least the steps of providing a rubber composition which comprises a peroxide with an initiating temperature lower than the vulcanization temperature of at least one of the rubber polymers; arranging an adhesive layer of the rubber composition on the surface of the moulded articles which is to be adhered; bringing the surfaces for adhering together under pressure; and vulcanizing at least the adhesive layer at an increased temperature.

Known methods of vulcanizing elastomeric compositions typically add sulfur containing compounds to an elastomer to achieve sulfur-containing cross-links between unsaturated bonds in the elastomeric polymer chains, or, alternatively, a peroxide to obtain carbon-carbon cross-links between chains. Unsaturations in the chains are not required in the latter case. In vulcanization of tires, a typical vulcanization cycle comprises holding the elastomeric tire composition under pressure for about 10 minutes at a reaction temperature of 160°C to 170°C.

The aim of the present invention is to develop a method of manufacturing elastomeric products having a low hysteresis, in particular lower than the hysteresis levels typically occurring in the known elastomeric products.

The aim of the present invention is achieved by a method of manufacturing an elastomeric product with a low hysteresis, the method comprising the steps of:
a) providing an elastomeric material composition, comprising an elastomeric material, sulfur and a peroxide; and
b) selecting a reaction temperature that is within the range of 140°C to 165°C;
c) vulcanizing the composition at the selected reaction temperature
   wherein the elastomeric material composition further comprises a curing agent for the peroxide initiated vulcanization reaction, wherein the ratio of the peroxide to the curing agent ranges from 1 part by weight of peroxide to 1.2 - 1.3 parts by weight of curing agent.

Selecting the reaction temperature in accordance with step b) in a sulfur and peroxide containing elastomeric composition, and vulcanizing the composition at this reaction temperature yields an elastomeric product with a lower level of hysteresis than with an elastomeric product obtained by the known method.

The selected reaction temperature in the method according to the invention will generally be lower than the temperature used in the known peroxide based curing cycles. It is believed that the low hysteresis may be partly due to the fact that the selected relatively low reaction temperature first initiates a sulfur vulcanization reaction, producing sulfur-containing cross-links between chains and a polysulfidic network, and delays or at least slows down the peroxide vulcanization reaction, which is only initiated later at the same reaction temperature. As a consequence thereof, an elastomeric cross-linked network is produced that differs from the known network and produces the relatively low hysteresis levels.

In case the elastomeric composition in accordance with the invention, i.e. comprising sulfur and peroxide, is cured at a reaction temperature that is higher than 50°C above the temperature at which the half-life time of the peroxide is 1 hour, a decreased mechanical strength and tear strength are observed decrease. This is believed to be due to the fact that the sulfur vulcanization reaction and the peroxide vulcanization reaction will interfere too much and produce a less optimal cross-linked network. The method of the invention allows to simultaneously achieve a low level of hysteresis and good mechanical strength and tear strength.

Selecting a reaction temperature that is higher than the temperature at which cross-links are formed in the composition is readily done. Indeed, the minimum temperature at which cross-links are formed in the composition in a reasonable (from an industrial point of view) amount of time can be obtained by performing a rheological test wherein the unvulcanized elastomeric composition is sheared at a constant temperature and the torque required to maintain a fixed shear or shear rate is monitored with time. The torque will initially decrease due to heating of the composition but will then, due to vulcanization, rise rather sharply since viscosity and later modulus of the composition rise as a result of increased cross-linking. Vulcanization occurs when the rise in torque is observed in the reasonable time frame. Please note that the scorch time in such a test is defined as the time elapsed until the torque level raises 2 units above its minimum value. If scorch time is too limited and premature scorch occurs, the partially cross-linked composition cannot properly flow during molding a product. This of course is undesirable.

The present invention provides a method in which the reaction temperature of the vulcanizing step c) will preferably be lower than the typical vulcanizing temperatures used in methods known in the art. An additional advantage associated with the lower temperature used in the method of the present invention is that an increase in scorch safety is obtained. Scorch safety is defined as the resistance against premature vulcanization, which would impair the compositions rheological properties.

The half-life time of the peroxide is well known to one skilled in the art and is defined as the time required to decompose one half of the initial amount of peroxide in the elastomeric composition at a certain reaction temperature. Half-life time decreases with reaction temperature and is obtainable from the peroxide supplier for a given peroxide and reaction temperature.

In the context of the present application, the terminology 'between' used in a range of values does not include the extremes of the indicated range.

In a preferred embodiment of the invention, a method is provided wherein the reaction temperature is selected between the temperature at which the half-life time of the peroxide is 1 hour and 30°C above the temperature at which the half-life time of the peroxide is 1 hour. More preferably, the reaction temperature is selected between the temperature at which the half-life time of the peroxide is 1 hour and 20°C above the temperature at which the half-life time of the peroxide is 1 hour.

In a further preferred embodiment of the invention, a method is provided wherein the reaction temperature is selected higher than the temperature at which sulfur-containing cross-links are formed in the composition. Preferably the reaction temperature is above the temperature at which sulfur-containing cross-links are formed in the composition and a temperature that is between the temperature at which the half-life time of the peroxide is 1 hour and 50°C above the temperature at which the half-life time of the peroxide is 1 hour. Even more preferred the reaction temperature is above the temperature at which sulfur-containing cross-links are formed in the composition and a temperature that is between the temperature at which the half-life time of the peroxide is 1 hour and 30°C, even more preferably 20°C, above the temperature at which the half-life time of the peroxide is 1 hour.

To increase the efficiency of the method even further and to reduce the time needed for the vulcanization process, curing agents, e.g. accelerators and activators, are preferably added in the method of the present invention, in particular curing agents for the peroxide initiated vulcanization reaction.

An embodiment of the method according to the invention adds a curing agent to the elastomeric material composition, whereby the ratio of the peroxide to the curing agent ranges from 1 part by weight of peroxide to 0.5 - 1.5 parts by weight of curing agent, and more preferably from 1 part by weight of peroxide to 1.2 - 1.3 parts by weight of curing agent.

In an embodiment, the curing agents may be selected from organic molecules comprising a maleimide, a (meth)acrylate, an allylic moiety and combinations thereof. Examples of organic molecules suitable as curing agent are ethylene dimethacrylate, diallylterephthalate, divinylbenzene, triallylisocyanurate, triallylphosphate, triallylcyanurate, 1,2-polybutadiene, N,N'-m-phenylene bismaleimide, trimethylolpropane trimethacrylate and combinations thereof. Preferably the curing agent is triallylcyanurate, 1,2-polybutadiene, N,N'-m-phenylene bismaleimide, trimethylolpropane trimethacrylate and combinations thereof. Most preferred the curing agent is N,N'-m-phenylene bismaleimide.

In a preferred embodiment the method of the present invention comprises the steps of providing an elastomeric material composition which comprises an elastomeric material, sulfur and a peroxide and vulcanizing the composition at a reaction temperature selected within the range of 100°C to 175°C, preferably within the range of 140°C to 165°C.

The elastomeric material, e.g. rubber, as applied in the method according to the invention can be prepared in a manner known to the skilled person. Any known method of mixing polymers, fillers and other additives is in principle suitable for this purpose. It is thus possible to mix rubber polymers, supplemented with additives and/or other polymers if desired, using an internal mixer or Banbury mixer, a single or double-screw extruder apparatus, a blade kneader, a Buss Co-kneader, a two-roll mill and the like. Suitable mixing temperatures are substantially determined by the rheological properties of the constituents of the polymer composition.

The elastomeric material preferably applied in the method according to the invention can be selected from known rubber polymers, preferably unsaturated rubber polymers. In general these rubbers have a glass transition temperature Tg lower than -10°C, although this is not essential. Rubbers suitable for application are for instance chosen from the group of natural rubbers, isoprene rubbers, butadiene rubbers, styrene butadiene copolymer rubbers, acrylonitrile butadiene copolymer rubbers, if desired copolymerized with styrene, butadiene isoprene copolymer rubbers, chloroprene rubbers, butyl and acryl rubbers, and ethylene-propylene copolymers which, if desired, comprise a third copolymerizable diene monomer such as for instance 1,4-hexadiene, dicyclopentadiene, dicyclooctadiene, methylene norbornene, ethylidene norbornene and tetrahydroindene. If desired, the rubber polymer also comprises a minor quantity of natural rubber and/or elastomer, which is preferably composed of 1,3-diene compounds such as for instance butadiene and/or isoprene and/or 2,3-dimethyl butadiene. The rubber polymer applied in the method is preferably an ethylene-propylene rubber, and the applied rubber polymer is more preferably an ethylene-propylene-diene rubber (EPDM). Mixtures of said rubber polymers are likewise possible. A composition comprising 80-100 parts by weight of EPDM and 0-20 parts by weight of natural rubber is particularly preferred.

In another preferred embodiment of the invention, the unsaturated rubber polymer comprises a copolymer of monomer units of ethylene and an alpha-olefin, wherein the ethylene monomer unit content ranges from 45 to 56 wt.%.

The peroxide present in the elastomeric composition is selected from a wide range of peroxides which are suitable for cross linking of elastomeric materials. Preferably the peroxide used in the method of the present invention is selected from the group of peroxides that are relatively stable at storage temperature but also relatively stable at compounding temperature. Examples of preferred peroxides are 2,5-dimethyl-2,5-di(tert-butylperoxy)hexane (DTBPH), dicumyl peroxide (DCP), benzoyl peroxide (BP) and di(tert-butylperoxyisopropyl)benzene (DTBPIB).

The sulfur present in the elastomeric composition is preferably elemental sulfur. In addition accelerators may be used to facilitate the sulfur vulcanization reaction. The accelerators may be selected from the group consisting of thiphosphates, benzothiazoles, benzothiazolesulfenamides, thiurams, and dithiocarabamates. Examples of suitable accelerators are 2-mercaptobenzothiazoles (MBT), 2,2'-dithiobenzothiazole (MBTS), N-cyclohexylbenzothiazole-2-sulfenamide (CBS), N-t-butylbenzothiazole-2-sulfenamide (TBBS), 2-morpholinothiobenzothiazole (MBS), N-dicyclohecxylbenzothiazole-2-sulfenamide (DCBS), tetramethylthiuram monosulfide (TMTM), tetramethylthiuram disulfide (TMTD), zinc dimethyldithiocarbamate

(ZDMC), zinc diethyldithiocarbamate (ZDEC) and combinations thereof, but others are also within the scope of the present invention.

A cross-linker for the elastomeric material can be added if desired. Particularly suitable cross-linkers for the elastomeric material, in particular for the EPDM rubber polymer, comprise phenol resins in combination with a tin chloride compound as catalyst. In addition, it is also possible to apply cross-linkers on the basis of sulfur and/or peroxides. The elastomeric material can also be provided, if desired, with reactive groups such as for instance hydroxyl groups, alkoxysilyl groups, amino and epoxide groups and/or carboxyl groups. Particularly suitable matrix polymers are those provided with carboxyl groups, for instance by grafting unsaturated dicarboxylic anhydride compounds onto the elastomeric material. A maleic anhydride-functionalized elastomeric material is in particular suitable.

If desired, additives can be added to the elastomeric material as applied in the method according to the invention. Examples of usual additives are stabilizers, antioxidants, lubricants, fillers, processing aids, such as fatty acid esters, alcohols and oils, dyes, pigments, flame-retardants, conductive fibers and reinforcing fibers. Other suitable fillers include carbon black, clay, silica, talc and chalk, and the like.
The elastomeric material can particularly also comprises an oil as additive. It is also possible to add petroleum plasticizers. Dyes suitable for elastomeric materials comprise any type known to the skilled person. It is thus possible to apply organic and/or inorganic dyes, and dyes which are soluble and/or non-soluble in elastomeric materials. Examples of suitable mineral dyes include metals in powder form, such as for instance powdered aluminum, copper, metal oxides such as for instance silicates, aluminates, titanates, iron oxides and/or hydroxides, in addition to mixtures of oxides of for instance cobalt, aluminum or zinc. White dyes are particularly suitable. Suitable organic colour pigments comprise for instance indanthrones, pyrroles and/or diazo compounds, in addition to organometallic pigments such as for instance phthalocyanines. Suitable coupling agents comprise silane compounds. Particularly suitable silane compounds comprise di- and tetrasulphides.

In another preferred embodiment, the present invention relates to an elastomeric product, e.g. a rubber product, obtained by the method of the present invention exhibiting a relatively low level of hysteresis as measured in a loading-unloading cycle and simultaneously a high level of tensile strength and ultimate strain, as well as tear strength, the latter being measured by a tensile test on a specimen provided with a central slit.

The invention also relates to tires and spoilers comprising the elastomeric product, e.g. rubber product, obtained by the method of the present invention.

The invention will now be further illustrated with reference to the following example, without however being limited thereto.

### Example

The EPDM material used in the example was a copolymer of ethylene, propylene and ethylidene norbornene, with an ethylene monomer unit content of 51 wt.%, and an ethylidene norbornene content of 9.5 wt.%. This EPDM was also used in preparing the premix. The EPDM premix was first prepared by mixing the components in the relative amounts given in Table 1.

**Table 1: composition of premix**

| Component | parts by weight |
|---|---|
| EPDM | 50 |
| Natural rubber | 50 |

The premix was then mixed with the other components in the relative amounts given in Table 2.

**Table 2: composition of Example**

| Component | Parts by weight |
|---|---|
| EPDM premix | 15 |
| EPDM | 85 |
| Carbon black | 70 |
| Oil | 20 |
| Zinc oxide | 5 |
| Stearic acid | 1 |
| Sulphur vulcanizing system | 10 |
| Peroxide vulcanizing system | 15 |

Mixing was carried out in an internal mixer for about 5 minutes. The fillers and processing aids were added after 1 minute mixing. The temperature of mixing was about 150 °C. The vulcanizing system was then added and mixed in at a maximum temperature of 100 °C. The peroxide vulcanizing system comprised a dicumylperoxide (DCP)/ N,N'-m-phenylene bismaleimide mixture in a ratio of 1 part DCP to 1.25 parts of N,N'-m-phenylene bismaleimide. The mixture upon released from the mixer was rolled out to a sheet using a two-roll mill and then pressed to form sheets with a thickness of about 2 mm and vulcanized at a temperature of 150 °C and a pressure of 100 bar. Test samples were punched out of the sheets to measure the mechanical properties.

## Claims

1. A method of manufacturing an elastomeric product with a low hysteresis, the method comprising the steps of:
a) providing an elastomeric material composition, comprising an elastomeric material, sulfur and a peroxide; and
b) selecting a reaction temperature that is within the range of 140°C to 165°C;
c) vulcanizing the composition at the selected reaction temperature,
wherein the elastomeric material composition further comprises a curing agent for the peroxide initiated vulcanization reaction, wherein the ratio of the peroxide to the curing agent ranges from 1 part by weight of peroxide to 1.2 - 1.3 parts by weight of curing agent.

2. The method according to claim 1, wherein the reaction temperature is selected higher than the temperature at which sulfur-containing cross-links are formed in the composition.

3. The method according to claim 1 or 2, wherein the curing agent is an organic molecule comprising a maleimide, a (meth)acrylate an allylic moiety and combinations thereof.

4. The method according to claim 3, wherein the curing agent is selected from the group consisting of divinylbenzene, allyl ester of cyanurates and isocyanurates.

5. The method according to claim 3, wherein the curing agent is N,N'-m-phenylene bismaleimide.

6. The method according to any one of the preceding claims, wherein the elastomeric material comprises an unsaturated rubber polymer.

7. The method according to claim 6, wherein the unsaturated rubber polymer is a blend of 80-100 parts by weight of EPDM and 0-20 parts by weight of natural rubber.

8. The method according to claim 6 or 7, wherein the unsaturated rubber polymer comprises a copolymer of monomer units of ethylene and an alpha-olefin, wherein the ethylene monomer unit content ranges from 45 to 56 wt.%.

9. The method according to any one of the preceding claims, wherein the peroxide in the elastomeric composition is 2,5-dimethyl-2,5-di(tert-butylperoxy)hexane, dicumyl peroxide, di(tert-butylperoxyisopropyl)benzene or combinations thereof.

10. The method according to any one of the preceding claims, wherein the sulfur in the elastomeric composition is elemental sulfur.

11. A flexible spoiler obtainable by the method according to any one of the preceding claims.

## Patentansprüche

1. Verfahren zum Herstellen eines elastomeren Produkts mit niedriger Hysterese, wobei das Verfahren die Schritte umfasst:
a) Bereitstellen einer elastomeren Materialzusammensetzung, umfassend ein elastomeres Material, Schwefel und ein Peroxid; und
b) Auswählen einer Reaktionstemperatur, die im Bereich von 140 °C bis 165 °C liegt;
c) Vulkanisieren der Zusammensetzung bei der ausgewählten Reaktionstemperatur,
wobei die elastomere Materialzusammensetzung ferner ein Härtungsmittel für die durch Peroxid eingeleitete Vulkanisierungsreaktion umfasst,
wobei das Verhältnis des Peroxids zum Härtungsmittel im Bereich von 1 Gewichtsteil Peroxid zu 1,2 - 1,3 Gewichtsteilen Härtungsmittel liegt.

2. Verfahren nach Anspruch 1, wobei die Reaktionstemperatur höher ausgewählt ist als die Temperatur, bei der schwefelhaltige Querverbindungen in der Zusammensetzung gebildet werden.

3. Verfahren nach Anspruch 1 oder 2, wobei das Härtungsmittel ein organisches Molekül ist, das ein Maleimid, ein (Meth)acrylat, einen allylischen Rest und Kombinationen davon umfasst.

4. Verfahren nach Anspruch 3, wobei das Härtungsmittel ausgewählt ist aus der Gruppe bestehend aus Divinylbenzol, Allylester von Cyanuraten und Isocyanuraten.

5. Verfahren nach Anspruch 3, wobei das Härtungsmittel N,N'-m-Phenylenbismaleimid ist.

6. Verfahren nach einem der vorangehenden Ansprüche, wobei das elastomere Material ein ungesättigtes Kautschukpolymer umfasst.

7. Verfahren nach Anspruch 6, wobei das ungesättigte Kautschukpolymer eine Mischung von 80-100 Gewichtsteilen EPDM und 0-20 Gewichtsteilen Naturkautschuk ist.

8. Verfahren nach Anspruch 6 oder 7, wobei das ungesättigte Kautschukpolymer ein Copolymer von Monomereinheiten von Ethylen und einem Alpha-Olefin umfasst, wobei der Gehalt der Ethylen-Monomereinheit von 45 bis 56 Gew.% reicht.

9. Verfahren nach einem der vorangehenden Ansprüche, wobei das Peroxid in der elastomeren Zusammensetzung 2,5-Dimethyl-2,5-di(tert-butylperoxy)hexan, Dicumylperoxid, Di(ter-butylperoxyisopropyl)benzol oder Kombinationen davon ist.

10. Verfahren nach einem der vorangehenden Ansprüche, wobei der Schwefel in der elastomeren Zusammensetzung elementarer Schwefel ist.

11. Flexibler Spoiler, der durch das Verfahren nach einem der vorangehenden Ansprüche erhältlich ist.

## Revendications

1. Procédé de fabrication d'un produit élastomère avec une faible hystérésis, le procédé comprenant les étapes de :
a) fourniture d'une composition de matériau élastomère, comprenant un matériau élastomère, du soufre et un peroxyde ; et
b) sélection d'une température de réaction qui est dans la plage de 140 °C à 165 °C ;
c) vulcanisation de la composition à la température de réaction sélectionnée,
dans lequel la composition de matériau élastomère comprenant en outre un agent de durcissement pour la réaction de vulcanisation initiée par peroxyde, dans lequel le rapport du peroxyde à l'agent de durcissement est dans la plage de 1 partie en poids de peroxyde à 1,2 à 1,3 partie en poids d'agent de durcissement.

2. Procédé selon la revendication 1, dans lequel la température de réaction choisie est supérieure à la température à laquelle des réticulations contenant du soufre sont formées dans la composition.

3. Procédé selon la revendication 1 ou 2, dans lequel l'agent de durcissement est une molécule organique comprenant un maléimide, un (méth)acrylate, un fragment allylique et des combinaisons de ceux-ci.

4. Procédé selon la revendication 3, dans lequel l'agent de durcissement est choisi dans le groupe constitué de divinylbenzène, ester allylique de cyanurates et d'isocyanurates.

5. Procédé selon la revendication 3, dans lequel l'agent de durcissement est le N,N'-m-phénylènebismaléimide.

6. Procédé selon l'une quelconque des revendications précédentes, dans lequel le matériau élastomère comprend un polymère de caoutchouc insaturé.

7. Procédé selon la revendication 6, dans lequel le polymère de caoutchouc insaturé est un mélange de 80 à 100 parties en poids d'EPDM et 0 à 20 parties en poids de caoutchouc naturel.

8. Procédé selon la revendication 6 ou 7, dans lequel le polymère de caoutchouc insaturé comprend un copolymère de motifs monomères d'éthylène et d'une alpha-oléfine, dans lequel la teneur en motif monomère d'éthylène est dans la plage de 45 à 56 % en poids.

9. Procédé selon l'une quelconque des revendications précédentes, dans lequel le peroxyde dans la composition d'élastomère est le 2,5-diméthyl-2,5-di(tert-butylperoxy)hexane, le peroxyde de dicumyle, le di(tert-butylperoxyisopropyl)benzène ou des combinaisons de ceux-ci.

10. Procédé selon l'une quelconque des revendications précédentes, dans lequel le soufre dans la composition d'élastomère est du soufre élémentaire.

11. Déflecteur flexible pouvant être obtenu par le procédé selon l'une quelconque des revendications précédentes.
